# EUROPÄISCHE PATENTSCHRIFT

(11) **EP 2 161 173 B1**
(45) Veröffentlichungstag und Bekanntmachung des Hinweises auf die Patenterteilung: **26.10.2011**
(21) Anmeldenummer: 09010910.9
(22) Anmeldetag: 26.08.2009
(51) Int. Cl.: B60W 30/06, B62D 15/02

(54) **Verfahren und Vorrichtung zur Unterstützung eines Einparkvorgangs eines Fahrzeugs**
Method and device to support the parking procedure of a vehicle
Procédé et dispositif destinés à assister un processus de stationnement d'un véhicule

(30) Priorität: 09.09.2008 DE 102008046367
(43) Veröffentlichungstag der Anmeldung: 10.03.2010
(73) Patentinhaber: Valeo Schalter und Sensoren GmbH, 74321 Bietigheim-Bissingen (DE)
(72) Erfinder: Barth, Harald, 70825 Korntal-Münchingen (DE)

(56) Entgegenhaltungen:
- EP-A1- 1 602 530
- DE-A1-102008 052 454
- JP-A- 2007 237 838

## Beschreibung

Die Erfindung betrifft ein Verfahren sowie eine Vorrichtung zur Unterstützung eines Einparkvorgangs eines Fahrzeugs in eine Parklücke der im Oberbegriff des Anspruchs 1 bzw. 14 genannten Art.

Ein derartiges Verfahren und eine derartige Vorrichtung sind bereits aus der EP 1 602 530 B1 bekannt. Bei dem bekannten Verfahren fährt der Fahrer das zu parkende Fahrzeug zunächst an einer seitlich neben einer Fahrbahn angeordneten Parklücke vorbei, wobei die Parklücke mittels einer Messeinrichtung vermessen wird. Die Messeinrichtung umfasst dabei wenigstens einen seitlich am Fahrzeug angeordneten Abstandssensor, welcher bei der Vorbeifahrt Länge und Tiefe der Parklücke sowie die Lagen von vorderer und hinterer Begrenzung der Parklücke bestimmt. Diese Messdaten werden einer Steuereinrichtung übermittelt, welche dann die Parkposition des Fahrzeugs in der Parklücke festlegt und eine Einparkbahn berechnet.

Der nachfolgende Einparkvorgang erfolgt dann semiautomatisch, derart dass die Längsregelung des Fahrzeugs durch den Fahrer mittels Gas- und Bremseingriff vorgenommen wird, während die Lenkung des Fahrzeugs selbsttätig durch die Steuereinrichtung betätigt wird, um das Fahrzeug ausgehend von der Startposition entlang der berechneten Einparkbahn in die Parkposition zu überführen. Zur Ausführung der Lenkbewegungen steuert die Steuereinrichtung dabei über das Bussystem des Fahrzeugs einen Aktuator der Lenkung an.

Des Weiteren ist aus der JP 2007 237838 A ein Verfahren bekannt, bei welchem die Lenkung durch eine Steuereinrichtung selbsttätig in eine Parkstellung lenkbewegt wird, nachdem das Fahrzeug seine Parkstellung erreicht hat. Die Parkstellung wird dabei in Abhängigkeit von der Fahrbahnneigung derart festgelegt, dass das Fahrzeug bei eine Abwärtsbewegung mit einem Rad auf einen seitlichen Bordstein auflaufen würde.

Aufgabe der Erfindung ist es, ein Verfahren und eine Vorrichtung zur Unterstützung eines Einparkvorgangs eines Fahrzeugs der im Oberbegriff des Anspruchs 1 bzw. 14 genannten Art dahingehend weiterzuentwickeln, dass der Fahrkomfort für den Fahrer noch weiter verbessert werden kann.

Diese Aufgabe wird erfindungsgemäß durch ein Verfahren gemäß Anspruch 1 sowie eine Vorrichtung gemäß Anspruch 14 gelöst. Weitere die Erfindung in vorteilhafter Weise ausgestaltende Merkmale enthalten die Unteransprüche.

Der mit der Erfindung erzielte Vorteil besteht darin, dass der Fahrer auch nach Erreichen der Parkposition noch weiter unterstützt wird, indem die Lenkung des Fahrzeugs nach Erreichen der Parkposition von der Steuereinrichtung selbsttätig in eine Parkstellung gelenkt wird. Die Parkstellung der Lenkung kann z. B. dazu vorgesehen sein, ein Wegrollen des geparkten Fahrzeugs an einer Steigung zu verhindern. Alternativ kann die Parkstellung der Lenkung aber auch dazu vorgesehen sein, dass Ausparken des Fahrzeug durch eine entsprechende Auslenkung der Räder zu erleichtern.

Die Lenkung wird von der Steuereinrichtung vorzugsweise dann in die Parkstellung lenkbewegt, wenn nach der Erreichen der Parkposition von der Steuereinrichtung ein entsprechendes Eingabesignal des Fahrers empfangen wird. Dadurch kann in besonders einfacher und zuverlässiger Weise sichergestellt werden, dass das Fahrzeug seine endgültige Parkposition erreicht hat. Als Eingabesignal kann dabei besonders einfach und benutzerfreundlich ein Schaltvorgang des Fahrers an einem Getriebe des Fahrzeugs oder die Arretierung einer Feststellbremse vorgesehen sein.

Zur Festlegung der Parkstellung der Lenkung wird vorzugsweise das Umfeld der Parklücke mittels einer Messeinrichtung vermessen und nachfolgend von der Steuereinrichtung in Abhängigkeit von den ermittelten Umfelddaten festgelegt. Die Messeinrichtung kann dabei geeignete Mittel umfassen, um die Neigung der Fahrbahn im Bereich der Fahrbahn und/oder Vorhandensein und ggf. Verlauf eines die Parklücke seitlich begrenzenden Hindernisses zu bestimmen.

Um unnötige Lenkbewegungen zu vermeiden, kann vorgesehen sein, dass die Lenkung von der Steuereinrichtung nur dann in die Parkstellung lenkbewegt wird, wenn von einer Messeinrichtung ein die Parklücke seitlich begrenzendes Hindernis, wie z. B. ein Bordstein erkannt wurde. Dem liegt die Überlegung zugrunde, dass ein Wegrollen des Fahrzeugs nur dann durch eine entsprechende Parkstellung der Lenkung verhindert werden kann, wenn ein solches seitliches Hindernis vorhanden ist.

Um ein Wegrollen des geparkten Fahrzeugs an einer Steigung in zuverlässiger Weise zu verhindern, kann die Neigung der Fahrbahn im Bereich der Parklücke bestimmt werden, wobei die Lenkung in Abhängigkeit von der Fahrbahnneigung derart in die Parkstellung ausgelenkt wird, dass das Fahrzeug bei einer Abwärtsbewegung mit einem Rad auf ein die Parklücke seitlich begrenzendes Hindernis, wie z. B. einen Bordstein aufläuft. Zur Vermeidung unnötiger Lenkbewegungen wird dabei von der Steuereinrichtung vorzugsweise der Betrag des Neigungswinkels bestimmt, wobei die Lenkung von der Steuereinrichtung nur dann in die Parkstellung lenkbewegt wird, wenn der Betrag des Neigungswinkels einen vorgegebenen Mindestwert überschreitet, d. h. wenn die Fahrbahn eine vorgegebene Mindeststeigung oder ein vorgegebenes Mindestgefälle überschreitet.

Die Neigung der Fahrbahn im Bereich der Parklücke kann besonders einfach und zuverlässig durch Messung der Fahrzeugneigung in der Parkposition und/oder während des Einparkvorgangs bestimmt werden. Zur Messung der Fahrzeugneigung kann dabei besonders einfach und kostengünstig ein ohnehin vorhandener, als Trägheitssensor ausgebildeter Beschleunigungssensor eines elektronischen Fahrstabilisierungssystems des Fahrzeugs verwendet werden.

Darüber hinaus wird die Parkstellung der Lenkung von der Steuereinrichtung so festgelegt, dass das Fahrzeug bei Vorwärts- oder Rückwärtsfahrt ausgehend von seiner Parkposition zumindest über einen gewissen Längenbereich dem Verlauf einer seitlichen Begrenzung der Parklücke, wie z. B. einem Bordstein folgt. Dass heißt die Parkstellung der Lenkung wird so eingestellt, dass die Krümmung der Fahrzeugbahn etwa der Krümmung des Bordsteins im Bereich der Parklücke entspricht. Hierdurch kann verhindert werden, dass sich die Ausrichtung des Fahrzeugs in der Parklücke dadurch verschlechtert, dass der Fahrer das Fahrzeug ausgehend von der Parkposition noch um eine gewisse Wegstrecke nach vorn oder nach hinten fährt.

Vorzugsweise wird dann bei Einlegen eines Vorwärtsganges oder einer Vorwärtsfahrstufe des Getriebes die Lenkung entsprechend einer ersten Parkstellung ausgerichtet, in welcher das Fahrzeug bei Vorwärtsfahrt ausgehend von seiner Parkposition zumindest über einen gewissen Längenbereich dem Verlauf der seitlichen Begrenzung folgt, und bei Einlegen eines Rückwärtsganges oder einer Rückwärtsfahrstufe des Getriebes entsprechend einer zweiten Parkstellung ausgerichtet, bei welcher das Fahrzeug bei Rückwärtsfahrt ausgehend von seiner Parkposition zumindest über einen gewissen Längenbereich dem Verlauf der seitlichen Begrenzung folgt.

Um unnötige Lenkbewegungen zu vermeiden, wird die Lenkung dabei von der Steuereinrichtung nur dann in die Parkstellung lenkbewegt, wenn die Krümmung des Bordsteins im Bereich der Parklücke eine vorgegebene Mindestkrümmung und/oder der Abstand des Fahrzeugs in der Parkposition zu einer vorderen und/oder hinteren Begrenzung der Parklücke einen vorgegebenen Mindestabstand überschreitet.

Zur Verbesserung des Bedienkomforts kann dem Fahrer über eine Informationseinrichtung eine Information über die Ausführung der Lenkbewegung in die Parkstellung gegeben werden. Nachfolgend werden Ausführungsbeispiele der Erfindung anhand einer zeichnerischen Darstellung näher erläutert.

In der Darstellung zeigen jeweils in schematischer Draufsicht:
- Fig. 1: einen Kraftwagen in einer Parkposition innerhalb einer ersten Parklücke,
- Fig. 2: den Kraftwagen in einer Parkposition innerhalb einer zweiten Parklücke an einer Steigung und
- Fig. 3: den Kraftwagen in einer Parkposition innerhalb einer dritten Parklücke mit gekrümmt verlaufender seitlicher Begrenzung.

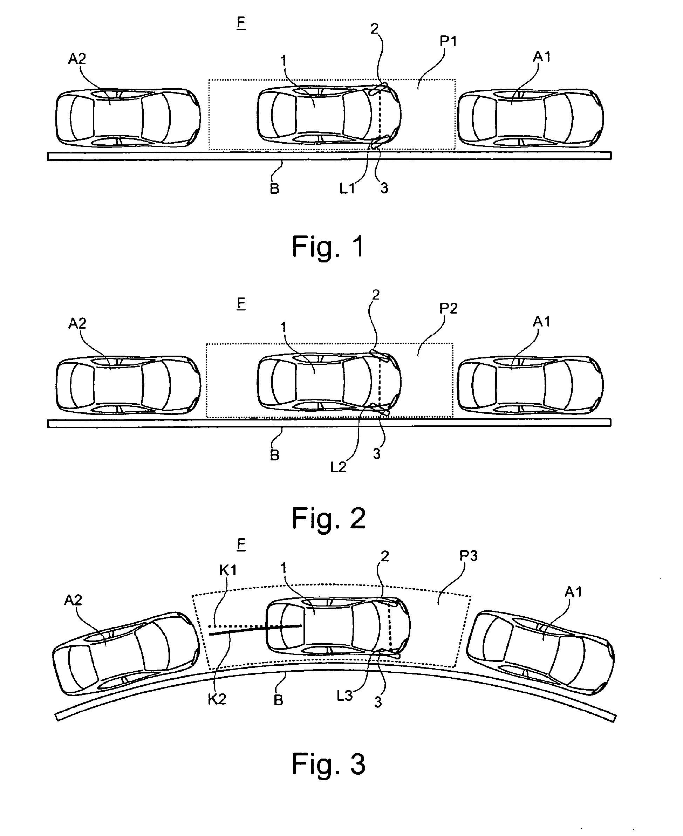

In den Fig. 1 - 3 ist ein Kraftwagen 1 jeweils in einer Parkposition innerhalb einer Parklücke P1, P2 oder P3 gezeigt. Die Parklücken P1 - P3 sind durch ein vorderes und ein hinteres Hindernis begrenzt, die jeweils durch ein geparktes Fahrzeug A1 bzw. A2 gebildet sind. Die seitlichen Begrenzungen der Parklücke P bilden eine Fahrbahn F sowie ein im seitlichen Abstand zur Fahrbahn F verlaufender Bordstein B.

Der Kraftwagen 1 weist eine Vorrichtung zur Unterstützung eines Einparkvorgangs mit einer Steuereinrichtung und einer mit dieser verbundenen Messeinrichtung auf. Die Messeinrichtung umfasst dabei zwei seitliche Abstandssensoren, die jeweils nahe dem Fahrzeugbug auf der Fahrer- bzw. Beifahrerseite des Kraftwagens 1 angeordnet sind. Die Abstandssensoren sind als an sich bekannte Ultraschall-Abstandssensoren ausgebildet und jeweils an einem seitlichen Rand eines vorderen Stoßfängers des Kraftwagens 1 angeordnet. Alternativ könnten die Abstandssensoren aber auch nahe dem Fahrzeugheck, z. B an einem Heckstoßfänger angeordnet sein.

Die Abstandssensoren sind mit einem nicht gezeigten Steuergerät verbunden und dazu ausbildet, seitlich neben dem Kraftwagen 1 angeordnete Objekte zu erkennen und deren seitlichen Abstand zum Kraftwagen 1 zu bestimmen. Über das Steuergerät werden die Abstandssensoren so angesteuert, dass bei der Vorbeifahrt des Kraftwagens 1 an der Parklücke P1 - P3 entlang der Fahrbahn F zumindest Längserstreckung und Tiefe der Parklücke sowie der Verlauf des die Parklücke P1 - P3 seitlich begrenzenden Bordsteins B bestimmt werden. Darüber hinaus können aber noch weitere geometrische Daten, wie z. B. Position und Orientierung der vor und hinter der Längsparklücke P1 - P3 geparkten Fahrzeuge A1 und A2 ermittelt werden.

Die Messeinrichtung des Kraftwagens 1 umfasst ferner wenigstens einen nicht gezeigten Wegsensor zur Ermittlung eines Fahrwegs des Kraftwagens 1, wobei der Wegsensor als an sich bekannter Radsensor ausgebildet ist, welcher die Umdrehungen eines Fahrzeugrades misst. Anhand des Radumfangs ist die Messeinrichtung dann in der Lage, den vom Kraftwagen 1 in Längsrichtung zurückgelegten Fahrweg zu bestimmen. Um den Fahrweg quer zur Längsrichtung zu bestimmen, umfasst die Messeinrichtung ferner einen nicht gezeigten Lenkwinkelsensor, über welchen bei der Vorbeifahrt des Kraftwagens 1 an der Parklücke P1 - P3 fortlaufend der vom Fahrer eingestellte Lenkwinkel gemessen wird.

Des Weiteren umfasst die Messeinrichtung einen Neigungssensor, um die Neigung der Fahrzeuglängsachse gegenüber der Horizontalen zu bestimmen. Als Neigungssensor ist dabei ein ohnehin vorhandener Beschleunigungssensor eines elektronischen Fahrstabilisierungssystems des Kraftwagens 1 vorgesehen. Der Beschleunigungssensor ist als an sich bekannter Trägheitssensor ausgebildet, bei welchem die Beschleunigungen des Kraftwagens 1 über eine Trägheitsmasse des Sensors gemessen werden. Anahand der statischen Auslenkung der Trägheitsmasse im Stillstand oder bei konstanter Geschwindigkeit des Kraftwagens 1 lassen sich zusätzlich die Neigung des Kraftwagens 1 messen. Der Beschleunigungssensor ist über das Bussystem des Kraftwagens 1 mit der Steuereinrichtung verbunden.

Die Steuereinrichtung umfasst Speichermittel zum speichern der von der Messeinrichtung ermittelten Daten sowie einen Prozessor mit einem Programmcode, um anhand dieser Daten eine Parkposition des Kraftwagens 1 innerhalb der Parklücke P1 - P3 festzulegen und nachfolgend ausgehend von einer Startposition des Kraftwagens 1 eine Einparkbahn zu ermitteln, entlang welcher der Kraftwagen 1 eine seine Parkposition gefahren wird.

Der Einparkvorgang erfolgt dabei semiautomatisch, derart dass der Fahrer durch Betätigung von Gas- und Bremse die Längsregelung des Kraftwagens 1 vornimmt, während die Lenkung des Kraftwagens 1 automatisch durch die Steuereinrichtung betätigt wird. Das Einparken kann dabei ein- oder mehrzügig erfolgen, wobei der Fahrer bei mehrzügigem Einparken zusätzlich noch Schaltvorgänge an einem Getriebe des Kraftwagens 1 vornimmt. Alternativ könnte der Einparkvorgang aber auch vollautomatisch erfolgen, derart dass die Steuereinrichtung über das Datenbussystem des Kraftwagens 1 mit Motorsteuerung und Bremse des Kraftwagens 1 verbunden ist, um einen vollautonomen Einparkvorgang des Kraftwagens 1 zu ermöglichen.

Der Einparkvorgang des Kraftwagens 1 in die Parklücken P1 - P3 läuft jeweils wie folgt ab:
Zunächst wird die Parklücke P1 - P3 während einer Vorbeifahrt des Kraftwagens 1 entlang der Fahrbahn F mittels der Messeinrichtung vermessen. Anhand der gemessenen Daten wird dann von der Steuereinrichtung eine Startposition für den Einparkvorgang und die Parkposition des Kraftwagens 1 innerhalb der Längsparklücke P1 - P3 bestimmt sowie eine Einparkbahn festlegt. Über eine Ausgabeeinrichtung wird dem Fahrer nachfolgend angezeigt, dass ein geführtes Einparken möglich ist. Zum Einparken wird der Kraftwagen 1 dann vom Fahrer nach Passieren der Parklücke P1 - P3 vorübergehend in einer Startposition gestoppt und durch Einlegen eines Rückwärtsganges der Einparkvorgang eingeleitet. Bei Einparken steuert der Fahrer durch Gas- und Bremseingriffe die Fahrgeschwindigkeit des Kraftwagens 1, während die Steuereinrichtung über das Bussystems des Kraftwagens 1 selbsttätig die Lenkung entsprechend der Einparkbahn betätigt. Der Kraftwagen 1 fährt dann ausgehend von der Startposition rückwärts entlang der Einparkbahn in seine Parkposition.

Nachdem der Kraftwagen 1 seine Parkposition erreicht hat, wird die Lenkung des Kraftwagens 1 ausgehend von ihrer Lenkstellung am Ende der Einparkbahn von der Steuereinrichtung in eine Parkstellung L1 - L3 ausgelenkt. Hierzu wird der Lenkung des Kraftwagens 1 über das Kraftwagenbussystem ein entsprechendes Steuersignal der Steuereinrichtung übermittelt. Die entsprechende Lenkbewegung erfolgt dabei im Stillstand des Kraftwagens 1. In der Parkstellung L1 - L3 der Lenkung sind die beiden gelenkten Vorderräder 2 und 3 des Kraftwagens 1 jeweils schräg zur Längsrichtung des Kraftwagens 1 ausgerichtet.

Die Lenkbewegung der Lenkung in die Parkstellung L1 - L3 wird von der Steuereinrichtung dann eingeleitet, wenn der Kraftwagen 1 seine Parkposition erreicht hat und sich im Stillstand befindet. Hierzu stellt die Steuereinrichtung über den Wegsensor oder einen anderen geeigneten Sensors des Kraftwagens 1 fest, dass die Fahrgeschwindigkeit gleich Null ist. Des Weiteren kann vorgesehen sein, dass die Lenkbewegung erst dann erfolgt, wenn der Kraftwagen 1 sich nach Erreichen der Parkposition für eine vorgegebene Zeitspanne im Stillstand befindet. Darüber hinaus kann die Lenkbewegung in die Parkstellung L1 - L3 erst dann vorgenommen werden, wenn die Steuereinrichtung ein entsprechendes Eingabesignal des Fahrers empfängt. Als Eingabesignal kann dabei insbesondere ein Schaltvorgang des Fahrers an einem manuellen Getriebe oder Automatikgetriebe oder die Arretierung einer Feststellbremse des Kraftwagens 1 vorgesehen sein. Nach Erreichen der Parkstellung L1 - L3, wird die Lenkung von der Steuereinrichtung wieder freigegeben. Alternativ kann die Steuereinrichtung nach Erreichen der Parkposition selbsttätig eine Feststellbremse, insbesondere eine elektrische Feststellbremse des Kraftwagens 1 arretieren.

In der Parkposition gemäß Fig. 1 ist der Kraftwagen 1 in einer Parklücke P1 angeordnet, die durch einen im Wesentlichen gerade verlaufenen Bordstein B begrenzt ist. Die Fläche der Parklücke P1 verläuft dabei etwa horizontal.

Für die Parklücke P1 gemäß Fig. 1 wird die Parkstellung L1 der Lenkung von der Steuereinrichtung so festgelegt, dass die Lenkung zur Fahrbahn F hin ausgelenkt ist, d. h. die beiden gelenkten Vorderräder 2 und 3 des Kraftwagens 1 sind jeweils mit ihrer vorderen Seite zur Fahrbahn F hin ausgelenkt. Die Lenkung ist dabei in der Parkstellung L1 um den maximal möglichen Lenkwinkel des Kraftwagens 1 zur Fahrbahn F hin ausgelenkt. Alternativ wäre aber auch eine Auslenkung um einen kleineren, in der Steuereinrichtung gespeicherten Lenkwinkel möglich. Durch Auslenkung der Lenkung in Richtung der Fahrbahn F soll das Ausparken des Kraftwagens 1 aus der Parklücke P1 erleichtert werden.

Die Lenkung des Kraftwagens 1 wird von der Steuereinrichtung dann in die Parkstellung L1 ausgelenkt, wenn der Kraftwagen 1 seine Parkposition erreicht und der Fahrer durch Einlegen einer Parkstellung des Getriebes oder Arretierung der Feststellbremse ein entsprechendes Eingabesignal gibt.

In seiner Parkposition P2 gemäß Fig. 2 ist der Kraftwagen 1 in einer Parklücke P2 angeordnet, die an einer Steigung liegt und somit in Längsrichtung geneigt verläuft, d. h. die Fläche der Parklücke P2 weist in Längsrichtung gesehen einen positiven Steigungswinkel gegenüber der Horizontalen auf. Somit verläuft der Kraftwagen 1 in seiner Parkposition ebenfalls mit einer Längsachse gegenüber der Horizontalen geneigt, wobei die Steigung in Vorwärtsfahrtrichtung des Kraftwagens 1 gesehen bergauf verläuft.

Für die Parkposition gemäß Fig. 2 wird die Parkstellung L2 der Lenkung von der Steuereinrichtung so festgelegt, dass dass Lenkung zum Bordstein B hin ausgelenkt ist, d. h. die beiden gelenkten Vorderräder 2 und 3 sind jeweils mit ihrer vorderen Seite zum Bordstein B hin ausgelenkt. Die Lenkung ist dabei in der Parkstellung L2 um den maximal möglichen Lenkwinkel des Kraftwagens 1 zum Bordstein B hin ausgelenkt. Alternativ wäre aber auch eine Auslenkung um einen kleineren, in der Steuereinrichtung gespeicherten Lenkwinkel möglich.

Aufgrund der Auslenkung der Lenkung in Richtung des Bordsteins würde der Kraftwagen 1 beim Bergabrollen mit einem Hinterrad seitlich auf den Bordstein B auflaufen. Somit soll ein Wegrollen des geparkten Kraftwagens 1 auch bei Lösen der Parkbremse verhindert werden.

Falls die Parklücke P2 an einem Gefälle liegt und die Fläche der Parklücke P2 somit in Längsrichtung gesehen einen negativen Steigungswinkel gegenüber der Horizontalen aufweisen, würde der Kraftwagen 1 in seiner Parkposition in Vorwärtsfahrtrichtung gesehen bergauf verlaufen. Auch für eine solche Parklücke P2 würde die Lenkung von der Steuereinrichtung in die Parkstellung L2 zum Bordstein B hin ausgelenkt. Beim Bergabrollen würde der Kraftwagen 1 dann mit seinem Vorderrad 3 seitlich auf den Bordstein B auflaufen, so dass auch hier ein Wegrollen des geparkten Kraftwagens 1 verhindert würde.

Zum Einstellen der Parkstellung L2 stellt die Steuereinrichtung zunächst fest, ob der Kraftwagen 1 seine Parkposition erreicht hat und sich im Stillstand befindet. Anschließend misst die Steuereinrichtung mittels des Neigungssensors die Neigung Kraftwagens 1 in der Parkposition und vergleicht den Betrag der Neigung mit einem vorgegebenen, in der Steuereinrichtung gespeicherten Neigungswert. Bei Überschreiten des Neigungswertes wird die Lenkung dann durch die Steuereinrichtung in die Parkstellung L2 ausgelenkt.

Alternativ könnte für die an einer Steigung liegenden Parklücke P2 aber auch eine Parkstellung entsprechend der Parkstellung L1 vorgesehen sein, bei welcher die Lenkung in Richtung der Fahrbahn B ausgelenkt ist. Beim Bergabrollen würde der Kraftwagen 1 dann mit seinem Vorderrad 3 auf den Bordstein B auflaufen. Allerdings sollte eine solche Parkstellung von der Steuereinrichtung nur dann eingestellt werden, wenn mittels der Messeinrichtung festgestellt wurde, dass der Kraftwagen 1 in seiner Parkposition einen vorgegebenen seitlichen Maximalabstand zum Bordstein nicht überschreitet. Der Maximalabstand ist dabei so bemessen, dass ein Vorbeirollen des Vorderrades 3 am Bordstein B verhindert wird.

In Fig. 3 ist eine Parklücke P3 gezeigt, welche seitlich durch einen Bordstein B mit gekrümmtem Verlauf begrenzt ist. Der Kraftwagen 1 ist dabei in seiner Parkposition etwa mittig zwischen den beiden geparkten Autos A1 und A2 angeordnet, weist einen von der Steuereinrichtung vorgegebenen seitlichen Abstand vom Bordstein B auf und verläuft mit seiner Längsachse etwa tangential zur Krümmung des Bordsteins B.

Ausgehend von der Parkposition gemäß Fig. 3 kann es vorkommen, dass der Fahrer nach Abschluss des Einparkvorgangs und Erreichen der von der Steuereinrichtung vorgegebenen Parkposition noch beabsichtigt, die Längsposition des Kraftwagens 1 in der Parklücke L3 zu verändern und den Kraftwagen 1 näher an das vordere A1 oder hintere geparkte Fahrzeug A2 heranzufahren. Dabei besteht jedoch aufgrund des gekrümmten Verlaufs des Bordsteins B das Problem, dass sich durch Vorwärts- oder Rückwärtsfahrt des Kraftwagens 1 ausgehend von der Parkposition die Ausrichtung des Kraftwagens 1 relativ zum Bordstein B verschlechtern kann, wenn sich die Lenkung des Kraftwagens 1 z. B. in ihrer Mittelstellung befindet. Somit wäre der Kraftwagen 1 nach der Vorwärts- oder Rückwärtsfahrt nicht mehr in einem optimalen Abstand und nicht mehr tangential zum Bordstein B angeordnet. Dies ist in Fig. 3 beispielhaft anhand der Bahnkurve K1 für eine Rückwärtsfahrt in der Mittelstellung der Lenkung angedeutet. Um diese Problematik zu vermeiden, wird von der Steuereinrichtung eine Parkstellung L3 der Lenkung festgelegt, die auf die Krümmung des Bordsteinverlaufs im Bereich der Parklücke P3 abgestimmt ist.

Wie in Fig. 3 beispielhaft für eine Rückwärtsfahrt durch die Bahnkurve K2 angedeutet wird, die Parkstellung L3 der Lenkung von der Steuereinrichtung derart festgelegt, dass der Kraftwagen 1 ausgehend von seiner Parkposition bei einer Rückwärtsfahrt im Wesentlichen dem gekrümmten Verlauf des Bordsteins B folgen würde. Der hierzu erforderliche Lenkwinkel der Parkstellung L3 wird dabei von der Steuereinrichtung anhand des von der Messeinrichtung bestimmten Verlaufs des Bordsteins B im Bereich der Parklücke P3 und des Fahrwegverlaufs des Kraftwagens 1 in Abhängigkeit vom Lenkwinkel ermittelt. Eine solche Festlegung kann z. B. anhand einer in der Steuereinrichtung gespeicherten Formel oder durch Interpolation von gespeicherten Tabellenwerten erfolgen.

Bei der Festlegung der Parkstellung der Lenkung ist zu berücksichtigen, dass für Vorwärts- und Rückwärtsfahrt unterschiedliche Lenkwinkel eingestellt werden müssen, um jeweils einen zum Bordstein B parallelen Fahrweg des Kraftwagens 1 zu erreichen. Daher wird die Lenkung von der Steuereinrichtung in die Parkstellung L3 ausgelenkt, wenn nach dem Erreichen der Parkposition ein Rückwärtsgang oder eine Rückwärtsfahrstufe des Getriebes eingelegt ist, während die Lenkung in eine zweite Parkstellung L4 ausgelenkt wird, wenn nach dem Erreichen der Parkposition vom Fahrer ein Vorwärtsgang oder Vorwärtsfahrstufe des Getriebes eingelegt wird. Die zweite Parkstellung L4 der Lenkung wird von der Steuereinrichtung dabei derart festgelegt, dass der Kraftwagen 1 ausgehend von seiner Parkposition bei einer Vorwärtsfahrt im Wesentlichen dem gekrümmten Verlauf des Bordsteins B folgen würde.

## Patentansprüche

1. Verfahren zur Unterstützung eines Einparkvorgangs eines Fahrzeugs in eine Parklücke, wobei der Verlauf einer seitlichen Begrenzung (Bordstein B) der Parklücke (P3) über eine Messeinrichtung bestimmt wird und wobei eine Lenkung des Fahrzeugs während des Einparkvorgangs durch eine Steuereinrichtung selbsttätig lenkbewegt wird,
**dadurch gekennzeichnet,**
**dass** nachdem das Fahrzeug (1) seine Parkposition erreicht hat die Lenkung durch die Steuereinrichtung selbsttätig in eine Parkstellung (L1, L2, L3, L4) lenkbewegt wird, wobei die Parkstellung (L3, L4) der Lenkung von der Steuereinrichtung so festgelegt wird, dass das Fahrzeug (1) bei Vorwärts- oder Rückwärtsfahrt ausgehend von seiner Parkposition zumindest über einen gewissen Längenbereich dem Verlauf der seitlichen Begrenzung (Bordstein B) folgt.

2. Verfahren nach Anspruch 1,
**dadurch gekennzeichnet,**
**dass** die Lenkung von der Steuereinrichtung dann in die Parkstellung (L1, L2, L3, L4) lenkbewegt wird, wenn nach Erreichen der Parkposition von der Steuereinrichtung ein Eingabesignal des Fahrers empfangen wird.

3. Verfahren nach Anspruch 2,
**dadurch gekennzeichnet,**
**dass** als Eingabesignal ein Schaltvorgang des Fahrers an einem Getriebe des Fahrzeugs (1) oder die Arretierung einer Feststellbremse vorgesehen ist.

4. Verfahren nach einem der vorherigen Ansprüche,
**dadurch gekennzeichnet,**
**dass** das Umfeld der Parklücke (P1, P2, P3) mittels einer Messeinrichtung vermessen wird, wobei die Parkstellung (L1, L2, L3, L4) von der Steuereinrichtung in Abhängigkeit von den ermittelten Umfelddaten festgelegt wird.

5. Verfahren nach einem der vorherigen Ansprüche,
**dadurch gekennzeichnet,**
**dass** die Parklücke (P1, P2, P3) mittels einer Messeinrichtung vermessen wird, wobei die Lenkung von der Steuereinrichtung dann in die Parkstellung (L1, L2, L3, L4) lenkbewegt wird, wenn von der Messeinrichtung ein die Parklücke (P1, P2, P3) seitlich begrenzendes Hindernis (Bordstein B) erkannt wurde.

6. Verfahren nach einem der vorherigen Ansprüche,
**dadurch gekennzeichnet,**
**dass** die Neigung der Fahrbahn (F) im Bereich der Parklücke (P2) bestimmt wird, wobei die Lenkung in Abhängigkeit von der Fahrbahnneigung derart in die Parkstellung (L2) ausgelenkt wird, dass das Fahrzeug (1) bei einer Abwärtsbewegung mit einem Rad auf einen die Parklücke (P2) seitlich begrenzenden Bordstein (B) aufläuft.

7. Verfahren nach Anspruch 6,
**dadurch gekennzeichnet,**
**dass** von der Steuereinrichtung der Betrag der Fahrbahnneigung bestimmt wird, wobei die Lenkung von der Steuereinrichtung dann in die Parkstellung (L2) lenkbewegt wird, wenn der Betrag des Neigungswinkels einen vorgegebenen Mindestwert überschreitet.

8. Verfahren nach Anspruch 6 oder 7,
**dadurch gekennzeichnet,**
**dass** die Neigung der Fahrbahn (F) im Bereich der Parklücke (P2) durch Messung der Fahrzeugneigung in der Parkposition und/oder während des Einparkvorgangs bestimmt wird.

9. Verfahren nach Anspruch 3,
**dadurch gekennzeichnet,**
**dass** bei Einlegen eines Rückwärtsganges oder einer Rückwärtsfahrstufe des Getriebes die Lenkung entsprechend einer ersten Parkstellung (L3) ausgerichtet wird, bei welcher das Fahrzeug (1) bei Rückwärtsfahrt ausgehend von seiner Parkposition zumindest über einen gewissen Längenbereich dem Verlauf der seitlichen Begrenzung (Bordstein B) folgt, und bei Einlegen eines Vorwärtsganges oder einer Vorwärtsfahrstufe des Getriebes die Lenkung entsprechend einer zweiten Parkstellung (L4) ausgerichtet wird, bei welcher das Fahrzeug (1) bei Vorwärtsfahrt ausgehend von seiner Parkposition zumindest über einen gewissen Längenbereich dem Verlauf der seitlichen Begrenzung (Bordstein B) folgt.

10. Verfahren nach Anspruch 1 oder 9,
**dadurch gekennzeichnet,**
**dass** die Krümmung der seitlichen Begrenzung (Bordstein B) im Bereich der Parklücke (P3) durch eine Messeinrichtung bestimmt wird, wobei die Lenkung von der Steuereinrichtung dann in die Parkstellung (L3, L4) lenkbewegt wird, wenn eine vorgegebene Mindestkrümmung überschritten wird.

11. Verfahren nach einem der Ansprüche 1, 9 oder 10,
**dadurch gekennzeichnet,**
**dass** der Abstand des Fahrzeugs (1) in der Parkposition zu einer vorderen (Fahrzeug A1) und/oder hinteren Begrenzung (Fahrzeug A2) der Parklücke (P3) bestimmt wird, wobei die Lenkung von der Steuereinrichtung dann in die Parkstellung (L3, L4) lenkbewegt wird, wenn ein vorgegebener Mindestabstand überschritten wird.

12. Verfahren nach einem der vorherigen Ansprüche,
**dadurch gekennzeichnet,**
**dass** dem Fahrer über eine Informationseinrichtung eine Information über die Ausführung der Lenkbewegung in die Parkstellung (L1, L2, L3, L4) gegeben wird.

13. Verfahren nach einem der vorherigen Ansprüche,
**dadurch gekennzeichnet,**
**dass** die Ausführung der Lenkbewegung in die Parkstellung (L1, L2, L3, L4) durch eine entsprechende Eingabe des Fahrers an einer Benutzeroberfläche verhindert werden kann.

14. Vorrichtung zur Unterstützung eines Einparkvorgangs eines Fahrzeugs in eine Parklücke mit einer Steuereinrichtung, um eine Lenkung des Fahrzeugs während des Einparkvorgangs selbsttätig zu Lenken, wobei eine Messeinrichtung vorgesehen ist, um den Verlauf einer seitlichen Begrenzung (Bordstein B) der Parklücke (P3) zu ermitteln,
**dadurch gekennzeichnet,**
**dass** die Steuereinrichtung dazu ausgebildet ist, die Lenkung selbsttätig in eine Parkstellung (L1, L2, L3, L4) zu lenken nachdem das Fahrzeug (1) seine Parkposition erreicht hat, wobei die Steuereinrichtung dazu ausgebildet ist, die Parkstellung (L3, L4) so zu bestimmen, dass das Fahrzeug (1) bei Vorwärts- oder Rückwärtsfahrt ausgehend von seiner Parkposition zumindest über einen gewissen Längenbereich dem Verlauf der seitlichen Begrenzung (Bordsteins B) folgt

15. Vorrichtung nach Anspruch 14,
**dadurch gekennzeichnet,**
**dass** die Steuereinrichtung derart mit einem Eingabemittel verbunden ist, dass die Lenkung dann in die Parkstellung (L1, L2, L3, L4) gelenkt wird, wenn nach der Erreichen der Parkposition über das Eingabemittel ein entsprechendes Eingabesignal des Fahrers empfangen wird.

16. Vorrichtung nach Anspruch 15,
**dadurch gekennzeichnet,**
**dass** als Eingabemittel ein Schalt- oder Wählhebel eines Getriebes des Fahrzeugs (1) vorgesehen ist.

17. Vorrichtung nach einem der Ansprüche 14 - 16,
**dadurch gekennzeichnet,**
**dass** eine Messeinrichtung vorgesehen ist, um das Umfeld der Parklücke (P1, P2, P3) zu vermessen, wobei die Steuereinrichtung dazu ausgebildet ist, die Parkstellung (L1, L2, L3, L4) der Lenkung anhand der Umfelddaten festzulegen.

18. Vorrichtung nach einem der Ansprüche 14 - 17,
**dadurch gekennzeichnet,**
**dass** eine Messeinrichtung zur Vermessung der Parklücke (P1, P2, P3) vorgesehen ist, wobei die Steuereinrichtung derart mit der Messeinrichtung verbunden ist, dass die Lenkung dann in die Parkstellung gelenkt wird, wenn mittels der Messeinrichtung ein die Parklücke (P1, P2, P3) seitlich begrenzendes Hindernis (Bordstein B) erkannt wurde.

19. Vorrichtung nach einem der Ansprüche 14 - 18,
**dadurch gekennzeichnet,**
**dass** Mittel vorgesehen sind, um die Neigung der Fahrbahn im Bereich der Parklücke (P2) zu bestimmen, wobei die Steuereinrichtung dazu ausgebildet ist, die Lenkung in Abhängigkeit von der Fahrbahnneigung derart in die Parkstellung (L2) auszulenken, dass das Fahrzeug (1) beim Abwärtsrollen mit einem Rad auf einen die Parklücke (P2) seitlich begrenzenden Bordstein (B) aufläuft.

20. Vorrichtung nach Anspruch 19,
**dadurch gekennzeichnet,**
**dass** die Mittel zur Bestimmung der Fahrbahnneigung wenigstens einen Neigungssensor umfassen, um die Fahrzeugneigung in der Parkposition und/oder während des Einparkvorgangs zu bestimmen.

21. Vorrichtung nach Anspruch 20,
**dadurch gekennzeichnet,**
**dass** als Neigungssensor ein als Trägheitssensor ausgebildeter Beschleunigungssensor des Kraftwagens (1) vorgesehen ist.

## Claims

1. Method for assisting a parking procedure of a vehicle into a parking space, wherein the profile of a lateral boundary (B) of the parking space (P3) is determined by means of a measuring device, and wherein a steering system of the vehicle is moved in an automatically steering fashion by a control device during the parking procedure,
**characterized**
**in that** after the vehicle (1) has reached its parking position, the steering system is moved in an automatically steering fashion into a parking setting (L1, L2, L3, L4) by the control device, wherein the parking setting (L3, L4) of the steering system is defined by the control device in such a way that during forward or rearward travel starting from its parking position the vehicle (1) follows the profile of the lateral boundary (B) at least over a certain length range.

2. Method according to Claim 1,
**characterized**
**in that** the steering system is moved in a steering fashion by the control device into the parking setting (L1, L2, L3, L4) when an input signal from the driver is received by the control device after the parking position has been reached.

3. Method according to Claim 2,
**characterized**
**in that** a gear shifting process by the driver on a gearbox of the vehicle (1) or the engagement of a parking brake is provided as an input signal.

4. Method according to one of the preceding claims, **characterized**
**in that** the surroundings of the parking space (P1, P2, P3) are measured by means of a measuring device, wherein the parking setting (L1, L2, L3, L4) is defined by the control device as a function of the surroundings data which are detected.

5. Method according to one of the preceding claims, **characterized**
**in that** the parking space (P1, P2, P3) is measured by means of a measuring device, wherein the steering system is moved in a steering fashion into the parking setting (L1, L2, L3, L4) when an obstacle (B) which laterally bounds the parking space (P1, P2, P3) has been detected by the measuring device.

6. Method according to one of the preceding claims, **characterized**
**in that** the inclination of the roadway (F) in the region of the parking space (P2) is determined, wherein the steering system is deflected into the parking setting (L2) as a function of the inclination of the roadway in such a way that in the case of a downward movement the vehicle (1) runs with a wheel up against a kerb (B) which laterally bounds the parking space (P2).

7. Method according to Claim 6,
**characterized**
**in that** the control device determines the absolute value of the inclination of the roadway, wherein the steering system is moved in a steering fashion into the parking setting (L2) by the control device when the absolute value of the angle of inclination exceeds a predefined minimum value.

8. Method according to Claim 6 or 7,
**characterized**
**in that** the inclination of the roadway (F) is determined in the region of the parking space (P2) by measuring the inclination of the vehicle in the parking position and/or during the parking procedure.

9. Method according to Claim 3,
**characterized**
**in that** when a reverse gear speed or a reverse driving position of the gearbox is engaged, the steering system is oriented in accordance with a first parking setting (L3) in which in the case of reversing the vehicle (1) follows the profile of the lateral boundary (B) at least over a certain length range starting from its parking position, and when a forward gear speed or a forward driving position of the gearbox is engaged, the steering system is oriented in accordance with a second parking setting (L4) in which in the case of forward travel the vehicle (1) follows the profile of the lateral boundary (B) at least over a certain length range starting from its parking position.

10. Method according to Claim 1 or 9,
**characterized**
**in that** the curvature of the lateral boundary (B) in the region of the parking space (P3) is determined by a measuring device, wherein the steering system is moved in a steering fashion into the parking setting (L3, L4) by the control device when a predefined minimum curvature is exceeded.

11. Method according to one of Claims 1, 9 or 10, **characterized**
**in that** the distance of the vehicle (1) in the parking position from a front boundary (A1) and/or rear boundary (A2) of the parking space (P3) is determined, wherein the steering system is moved in a steering fashion into the parking setting (L3, L4) by the control device when a predefined minimum distance is exceeded.

12. Method according to one of the preceding claims, **characterized**
**in that** information relating to the execution of the steering movement into the parking setting (L1, L2, L3, L4) is issued to the driver via an information device.

13. Method according to one of the preceding claims, **characterized**
**in that** the execution of the steering movement into the parking setting (L1, L2, L3, L4) can be prevented by corresponding input by the driver into a user interface.

14. Device for assisting a parking procedure for a vehicle into a parking space having a control device for automatically steering a steering system of the vehicle during the parking procedure, wherein a measuring device is provided in order to determine the profile of the lateral boundary (B) of the parking space (P3),
**characterized**
**in that** the control device is designed to steer the steering system automatically into a parking setting (L1, L2, L3, L4) after the vehicle (1) has reached its parking position, wherein the control device is designed to determine the parking setting (L3, L4) in such a way that in the case of forward travel or reverse travel the vehicle (1) follows the profile of the lateral boundary (B) at least over a certain length range starting from its parking position.

15. Device according to Claim 14,
**characterized**
**in that** the control device is connected to an input means in such a way that the steering is deflected into the parking setting (L1, L2, L3, L4) when a corresponding input signal from the driver is received via the input means after the parking position has been reached.

16. Device according to Claim 15,
**characterized**
**in that** a gear shift lever or selector lever of a gearbox of the vehicle (1) is provided as the input means.

17. Device according to one of Claims 14-16, **characterized**
**in that** a measuring device is provided in order to measure the surroundings of the parking space (P1, P2, P3), wherein the control device is designed to define the parking setting (L1, L2, L3, L4) of the steering system using the surroundings data.

18. Device according to one of Claims 14-17, **characterized**
**in that** a measuring device is provided for measuring the parking space (P1, P2, P3), wherein the control device is connected to the measuring device in such a way that the steering system is steered into the parking setting when an obstacle (B) which laterally bounds the parking space (P1, P2, P3) has been detected by means of the measuring device.

19. Device according to one of Claims 14-18, **characterized**
**in that** means are provided in order to determine the inclination of the roadway in the region of the parking space (P2), wherein the control device is designed to deflect the steering system into the parking setting (L2) as a function of the inclination of the roadway in such a way that in the case of downward coasting the vehicle (1) runs with a wheel up against a kerb (B) which laterally bounds the parking space (P2).

20. Device according to Claim 19,
**characterized**
**in that** the means for determining the inclination of the roadway comprise at least one inclination sensor in order to determine the inclination of the vehicle in the parking position and/or during the parking procedure.

21. Device according to Claim 20,
**characterized**
**in that** an acceleration sensor of the motor vehicle (1), which is embodied as an inertia sensor, is provided as an inclination sensor.

## Revendications

1. Procédé destiné à assister une opération de stationnement d'un véhicule dans une place de stationnement, le contour d'une limitation latérale (B) de la place de stationnement (P3) étant détermine par le biais d'un dispositif de mesure et une direction du véhicule étant déplacée automatiquement pendant l'opération de stationnement par un dispositif de commande, **caractérisé en ce que**,
après que le véhicule (1) a atteint sa position de stationnement, la direction est déplacée automatiquement dans une position de stationnement (L1, L2, L3, L4) par le dispositif de commande, la position de stationnement (L3, L4) de la direction étant établie par le dispositif de commande de telle sorte que le véhicule (1), lors d'une conduite en marche avant ou en marche arrière, à partir de sa position de stationnement, suive au moins sur une certaine plage de longueur, le contour de la limitation latérale (B).

2. Procédé selon la revendication 1,
**caractérisé en ce que**
la direction est déplacée par le dispositif de commande dans la position de stationnement (L1, L2, L3, L4) lorsqu'un signal d'entrée du conducteur est reçu par le dispositif, de commande après l'arrivée dans la position de stationnement.

3. Procédé selon la revendication 2,
**caractérisé en ce**
**qu'**on utilise comme signal d'entrée une opération de changement de rapport du conducteur au niveau d'une boîte de vitesse du véhicule (1) ou le blocage d'un frein de stationnement.

4. Procédé selon l'une quelconque des revendications précédentes,
**caractérisé en ce que**
l'environnement de la place de stationnement (P1, P2, P3) est mesuré au moyen d'un dispositif de mesure, la position de stationnement (L1, L2, L3, L4) étant établie par le dispositif de commande en fonction des données environnantes déterminées.

5. Procédé selon l'une quelconque des revendications précédentes,
**caractérisé en ce que**
la place de stationnement (P1, P2, P3) est mesurée au moyen d'un dispositif de mesure, la direction étant déplacée par le dispositif de commande dans la position de stationnement (L1, L2, L3, L4) lorsque le dispositif de mesure a détecté un obstacle (B) limitant latéralement la place de stationnement (P1, P2, P3).

6. Procédé selon l'une quelconque des revendications précédente,
**caractérisé en ce que**
la pente de la chaussée (F) dans la région de là place de stationnement: (P2) est déterminée, la direction étant déviée dans la position de stationnement (L2) en fonction de la pente de la chaussée de telle sorte que le véhicule (1), lors d'un déplacement en descente, roule avec une roue sur un bord de trottoir (B) limitant latéralement la place de stationnement (P2).

7. procédé selon la revendication 6, **caractérisé en ce que**
le dispositif de commande détermine l'ampleur de la pente de la chaussée, la direction étant déplacée par le dispositif, de commande dans la position de stationnement (L2) lorsque l'ampleur de l'angle d'inclinaison dépasse une valeur minimale prédéfinie.

8. Procédé selon la revendication 6 ou 7, **caractérise en ce que**
la pente de la chaussée (F) est déterminée dans la région de la place de stationnement (P2) par mesure de l'inclinaison du véhicule dans la position de stationnement et/ou pendant l'opération de stationnement.

9. Procédé selon la revendication 3,
**caractérisé en ce que**
lors de l'enclenchement d'une vitesse de marche arrière ou d'un rapport de marche arrière de la boite de vitesse, la direction est orientée en fonction d'une première position de stationnement (L3), dans laquelle le véhicule (1), dans le cas d'une conduite en arrière depuis sa position de stationnement, suive au moins sur une certaine plage de longueur le contour de la limitation latérale (B), et en cas d'enclenchement d'une vitesse de marche avant ou apport de marche avant de la boîte de vitesse, la direction est orientée en fonction d'une deuxième position de stationnement (L4, dans laquelle le véhicule (1), dans le cas d'une conduite en avant depuis sa position de stationnement, suive au moins sur une certaine plage de longueur le contour de la limitation latérale (B).

10. Procédé selon la revendication 1 ou 9,
**caractérisé en ce que**
la courbure de la limitation latérale (B) est déterminée dans la région de la place de stationnement (P3) par un dispositif de mesure, la direction étant déplacée par le dispositif de commande dans la position de stationnement (L3, L4) lorsqu'une courbure minimale prédéfinie est dépassée.

11. Procédé selon l'une quelconque des revendications 1, 9 ou 10,
**caractérisé en ce que**
la distance du véhicule (1) dans la position de stationnement à une limitation avant (A1) et/ou arrière (A2) de la place de stationnement (P3) est déterminée, la direction, étant déplacée par le dispositif de commande dans la position de stationnement (L3, L4) lorsqu'une distance minimale prédéfinie est dépassé

12. Procédé selon l'une quelconque des revendications précédentes,
**caractérisé en ce que**
le conducteur reçoit, par le biais d'un dispositif d'information,une information concernant la réalisation du mouvement de direction dans la position de stationnement (L1, L2, L3, L4).

13. Procédé selon l'une quelconque des revendications précédentes,
**caractérisé en ce que**
la réalisation du mouvement de direction dans la position de stationnement (L1, L2, L3, L4) peut être empêchée par une entrée correspondante du conducteur au niveau d'une surface utilisateur.

14. Dispositif pour assister une opération de stationnement d'un véhicule dans une place de stationnement, comprenant un dispositif de commande pour diriger automatiquement une direction du véhicule pendant l'opération de stationnement, un dispositif de mesure étant prévu pour déterminer le contour d'une limitation latérale (B) de la place de stationnement (P3), **caractérisé en ce que**
le dispositif de commande est réalisé de manière à diriger automatiquement la direction dans une position de stationnement (L1, L2, L3, L4) après que le véhicule (1) a atteint sa position de stationnement, le dispositif de commande étant réalisé de manière à déterminer la position de stationnement (L3, L4) de telle sorte que le véhicule (1), lors d'une conduite en marche avant ou en marche arrière, à partir de sa position de stationnement, suive le contour de la limitation latérale (B) au moins sur une certaine plage de longueur.

15. Dispositif selon la revendication 14, **caractérisé en ce que**
le dispositif de commande est connecté à un moyen de saisie de telle sorte que la direction soit dirigée dans la position de stationnement (L1, L2, L3, L4) lorsqu'un signal d'entrée correspondant du conducteur est reçu par le biais du moyen de saisie après que la position de stationnement a été atteinte.

16. Dispositif selon la revendication 15,
**caractérisé en ce que**
l'on prévoit comme moyen de saisie un levier de sélection ou de commutation d'une boîte de vitesse du véhicule (1).

17. Dispositif, selon l'une quelconque des revendications 14 à 16,
**caractérisé en ce que** l'on prévoit un dispositif de mesure pour mesurer les environs de la place de stationnement (P1, P2, P3), le dispositif de commande étant réalise de manière à établir la position de stationnement (L1, L2, L3, L4) de la direction à l'aide des données environnantes.

18. Dispositif selon l'une quelconque des revendications 14 à 17,
**caractérisé en ce**
**qu'**un dispositif de mesure est prévu pour mesurer la place de stationnement (P1, P2 P3), le dispositif de commande étant connecté au dispositif de mesure de telle sorte que la direction soit dirigée dans la position de stationnement lorsqu'un obstacle (B) limitant latéralement la place de stationnement (P1, P2, P3) a été déterminé au moyen du dispositif de mesure.

19. Dispositif selon l'une quelconque des revendications 14 à 18,
**caractérisé en ce que**
des moyens sont prévus pour déterminer l'inclinaison de la chaussée dans la région de la place de stationnement (P2), le dispositif de commande étant conçu pour dévier la direction en fonction de l'inclinaison de la chaussée dans la position de stationnement (L2) de telle sorte que le véhicule (1), en cas de roulage en descente, roule avec une roue sur un bord de trottoir (B) limitant latéralement la place de stationnement (P2).

20. Dispositif selon la revendication 19,
**caractérisé en ce que**
les moyens pour déterminer l'inclinaison de la chaussée comprennent au moins un capteur d'inclinaison afin de déterminer l'inclinaison du véhicule dans la position de stationnement et/ou pendant l'opération de stationnement.

21. Dispositif selon la revendication 20, **caractérisé en ce que**
l'on prévoit comme capteur d'inclinaison un capteur d'accélération du véhicule (1) réalisé sous forme de capteur à inertie.
